# EUROPÄISCHE PATENTSCHRIFT

(11) **EP 2 630 459 B1**
(45) Veröffentlichungstag und Bekanntmachung des Hinweises auf die Patenterteilung: **03.09.2014**
(21) Anmeldenummer: 11769858.9
(22) Anmeldetag: 11.10.2011
(51) Int. Cl.: G01L 5/28, G01M 17/007, B60T 7/22

(54) **VERFAHREN ZUM SICHERN EINES FAHRZEUGS IN EINEM ROLLENPRÜFSTAND**
METHOD FOR SECURING A VEHICLE TO A ROLLER-TYPE TEST STAND
PROCÉDÉ PERMETTANT DE SÉCURISER UN VÉHICULE SUR UN BANC D'ESSAI À ROULEAUX

(30) Priorität: 18.10.2010 DE 102010042590
(43) Veröffentlichungstag der Anmeldung: 28.08.2013
(73) Patentinhaber: Robert Bosch GmbH, 70442 Stuttgart (DE)
(72) Erfinder: BAEHRLE-MILLER, Frank, 71101 Schoenaich (DE); BLATTERT, Dieter, 74366 Kirchheim/Neckar (DE)
(86) Internationale Anmeldenummer: PCT/EP2011/067724
(87) Internationale Veröffentlichungsnummer: WO 2012/052320

(56) Entgegenhaltungen:
- EP-A2- 1 887 336
- DE-A1- 3 439 619
- DE-A1- 4 031 838

## Beschreibung

### Stand der Technik

Die Erfindung betrifft ein Verfahren zum Sichern eines Fahrzeugs, das sich mit den Rädern einer Achse in einem Rollenprüfstand befindet, gegen ein unbeabsichtigtes Herausschieben aus dem Prüfstand.

Zur Überprüfung der Feststellbremsanlage wird ein Kraftfahrzeug meistens auf einen sogenannten Rollenprüfstand gefahren, der die auf dem Prüfstand stehende Achse mittels Rollen antreibt. Nach einer Betätigung der Feststellbremse wird für die gebremsten Räder jeweils das Bremsmoment angezeigt. Die Höhe des Bremsmoments und ggf. die Abweichung zwischen dem linken und rechten Rad des Fahrzeugs können somit angezeigt und ausgewertet werden. Ein solches Verfahren ist EP 1887336 offenbart.

Insbesondere automatisiert betätigte Feststellbremsen bauen relativ schnell ein hohes Bremsmoment auf. Wenn sich ein Fahrzeug mit einer automatisierten Feststellbremse auf dem Rollenprüfstand befindet, kann es durch die antreibende Wirkung der Rollen bei gleichzeitigem Aufbau von Bremsmoment an der Feststellbremse dazu kommen, dass das Fahrzeug aus dem Prüfstand herausgeschoben wird. In diesem Fall muss das Fahrzeug für eine erneute Prüfung noch einmal rückwärts in den Prüfstand gefahren werden. Wesentlich kritischer ist aber, dass Personen, die sich in der Nähe des Fahrzeugs aufhalten, durch die unerwartete Bewegung des Fahrzeugs zu Schaden kommen können. Dieses Problem wird in DE 4031838 mittels einer speziellen Haltevorrichtung gelöst.

### Offenbarung der Erfindung

Es ist daher die Aufgabe der vorliegenden Erfindung, ein Verfahren zum Sichern eines Fahrzeugs, das sich mit den Rädern einer Achse in einem Rollenprüfstand befindet, gegen ein unbeabsichtigtes Herausschieben aus dem Prüfstand zu schaffen.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, mit Hilfe einer Sensorik zu ermitteln, ob sich das Fahrzeug in einem Rollenprüfstand befindet und, falls dies festgestellt wurde, die Radbremse wenigstens eines Rades, das sich außerhalb des Rollenprüfstandes befindet, automatisch zu aktivieren, nachdem die Feststellbremse betätigt wurde. Das Fahrzeug wird somit an wenigstens einem Rad, das sich außerhalb des Rollenprüfstandes befindet, gebremst und kann somit nicht mehr aus dem Rollenprüfstand heraus geschoben werden.

Die Auslösebedingung für Aktivieren der wenigstens einen Radbremse kann z.B. das Betätigen eines Bedienelements, wie z.B. eines Tasters der Feststellbremse sein.

Bei den meisten heutigen Fahrzeugen befindet sich die Feststellbremse an den Rädern der Hinterachse. In diesem Fall wird die Radbremse wenigstens eines Vorderrades aktiviert. Vorzugsweise werden alle Vorderräder automatisch gebremst.

Gemäß einer bevorzugten Ausführungsform der Erfindung wird das Bremsmoment mit Hilfe eines Aktuators der Betriebsbremsanlage, wie z.B. einer Hydraulikpumpe, aufgebaut. Der Aktuator wird hierzu von einem Steuergerät entsprechend angesteuert.

Für die Umsetzung der Erfindung ist es wichtig, mit hoher Zuverlässigkeit zu erkennen, dass sich das Fahrzeug in einem Rollenprüfstand befindet. Gemäß der Erfindung wird dies durch Überprüfung einer oder mehrerer Bedingungen erkannt, wie z.B. dass sich die Räder einer Achse mit einer bestimmten Geschwindigkeit drehen, während die Räder einer anderen Achse still stehen. Zusätzlich kann die Bedingung vorgegeben sein, dass dieser Zustand länger dauern muss, als eine vorgegebene Zeit. Eine alternative oder zusätzliche Bedingung kann auch sein, dass die Zündung eingeschaltet ist und/oder dass sich das Getriebe im Leerlauf befindet. Optional kann auch das Signal eines Beschleunigungssensors ausgewertet werden, der eine Längsbeschleunigung misst. Beim Einfahren in einen Rollenprüfstand wird nämlich ein kurzer Beschleunigungsimpuls erzeugt, danach ist das Signal annäherungsweise konstant, da das Fahrzeug steht. Durch Auswertung eines Beschleunigungssensors kann somit, ggf. in Kombination mit einer der vorstehend genannten Bedingungen, erkannt werden, ob sich das Fahrzeug in einem Rollenprüfstand befindet.

Gemäß einer bevorzugten Ausführungsform der Erfindung wird, sobald eine Anforderung zum Lösen der Feststellbremse, z.B. durch eine Tasterbetätigung, erkannt wurde, die wenigstens eine aktivierte Radbremse automatisch wieder gelöst. Das Bremsmoment kann wahlweise aber auch erst abgebaut werden, wenn ein Anfahrwunsch erkannt wird, z.B. wenn ein Gang eingelegt oder das Fahrpedal betätigt wird.

Das an dem bzw. den außerhalb des Prüfstands befindlichen Rädern erzeugte Bremsmoment sollte so aufgebaut werden, dass das Fahrzeug daran gehindert wird, sich in seitlicher Richtung oder nach vorne aus dem Prüfstand heraus zu bewegen. Gemäß einer ersten Ausführungsform der Erfindung wird zunächst das Bremsmoment an wenigstens einem außerhalb des Prüfstands befindlichen Rad erhöht und die Feststellbremse erst gespannt, wenn das Bremsmoment einen vorgegebenen Wert erreicht hat, bzw. ein entsprechender hydraulischer Druck von z.B. 20 bar bis 40 bar erreicht wurde.

Alternativ kann die Feststellbreme aber auch gleichzeitig mit der bzw. den Radbremsen angezogen werden, wobei der Kraftaufbaugradient an der Feststellbremse kleiner sein sollte als an den automatisch betätigten Radbremsen.

Die Erfindung wird nachstehend anhand der beigefügten Zeichnungen beispielhaft näher erläutert. Es zeigen:

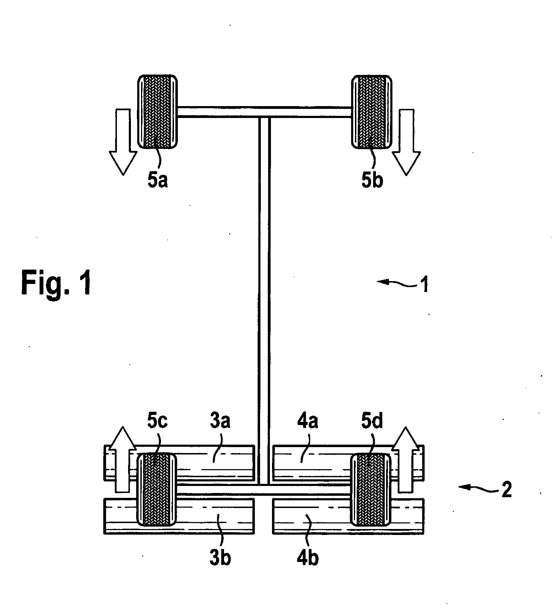

- Fig. 1: eine schematische Darstellung eines Fahrzeuges, das sich in einem Rollenprüfstand befindet.

Figur 1 zeigt eine schematische Ansicht eines zweiachsigen Kraftfahrzeugs, das sich mit den Rädern 5c, 5d der Hinterachse in einem Rollenprüfstand 2 befindet. Der Rollenprüfstand umfasst für jedes Rad 5c, 5d zwei Rollen 3a, 3b beziehungsweise. 4a, 4b, von denen jeweils eine (z.B. 3a, 4a) angetrieben wird. Um die Funktionsfähigkeit der an den Hinterrädern 5c, 5d angeordneten Feststellbremse zu prüfen, wird zunächst der Taster der Feststellbremse betätigt und an den Hinterrädern automatisch Bremsdruck aufgebaut. Die Rollen 3a, 3b; 4a, 4b des Rollenprüfstandes 2 werden dadurch abgebremst. Das bei diesen Vorgang aufgebrachte Bremsmoment wird für jedes der Räder 5c, 5d separat angezeigt und kann ausgewertet werden.

Um zu vermeiden, dass sich das Fahrzeug durch die bei diesen Vorgang auftretenden Kräfte schräg stellt oder aus dem Prüfstand heraus geschoben wird, werden die Radbremsen der Vorderräder 5a, 5b automatisch aktiviert.

Gemäß einem Ausführungsbeispiel der Erfindung wird mit Hilfe einer Sensorik ermittelt, ob sich das Fahrzeug in einem Rollenprüfstand befindet. Hierzu können eine oder mehrere Bedingungen überwacht werden, beispielsweise ob sich die Räder 5c, 5d der Hinterachse mit einer bestimmten Geschwindigkeit, z.B. zwischen 5 km/h und 7 km/h, drehen, während die Räder 5a, 5b der Vorderachse still stehen; ob dieser Zustand ggf. länger als eine vorgegebene Zeit dauert; die Zündung eingeschaltet ist oder ob sich das Getriebe im Leerlauf befindet.

Wenn festgestellt wurde, dass sich das Fahrzeug in einem Rollenprüfstand befindet, wird nach einer Anforderung der Feststellbremse mittels des Bedienelements an den Radbremsen der Vorderräder 5a, 5b automatisch Bremsmoment aufgebaut. Hierzu wird ein Aktuator der Betriebsbremsanlage, wie z.B. eine Hydraulikpumpe entsprechend angesteuert. Die beiden Vorderräder 5a, 5b werden dadurch gebremst, so dass das Fahrzeug nicht mehr ohne weiteres auf dem Rollenprüfstand herausgeschoben werden kann.

Das Bremsmoment an den Vorderrädern 5a, 5b wird aufgebaut, sobald das Bedienelement der Feststellbremse betätigt wurde. Der Aufbau der Bremskraft bzw. des -moments an den Vorderrädern 5a, 5b erfolgt dabei vorzugsweise schneller als bei der Feststellbremse. Üblicherweise reicht ein Druck von etwa 20 bar bis 40 bar an den Vorderrädern 5a, 5b aus, um das Fahrzeug zu sichern.

## Patentansprüche

1. Verfahren zum Sichern eines Fahrzeugs (1), das sich mit den Rädern (5c, 5d) einer Achse in einem Rollenprüfstand (2) befindet, gegen ein unbeabsichtigtes Herausschieben aus dem Prüfstand (2) bei einer Überprüfung der Feststellbremse, **dadurch gekennzeichnet, dass** sensorisch ermittelt wird, ob sich das Fahrzeug (1) in einem Rollenprüfstand (2) befindet und, falls dies erkannt wurde, an wenigstens einer Radbremse eines Rades (5a, 5b) das sich außerhalb des Rollenprüfstandes (2) befindet, automatisch ein Bremsmoment aufgebaut wird, nachdem ein Bedienelement der Feststellbremse betätigt wurde.

2. Verfahren nach Anspruch 1, **dadurch gekennzeichnet, dass** das Bremsmoment an wenigstens einer Radbremse eines Vorderrades (5a, 5b) aufgebaut wird.

3. Verfahren nach Anspruch 1 oder 2, **dadurch gekennzeichnet, dass** ein Aktuator der Betriebsbremse automatisch angesteuert wird, um das Bremsmoment an der wenigstens einen Radbremse zu erhöhen.

4. Verfahren nach einem der vorhergehenden Ansprüche, **dadurch gekennzeichnet, dass** das Bremsmoment wieder abgebaut wird, wenn eine Anforderung zum Lösen der Feststellbremse erkannt wurde.

5. Verfahren nach einem der vorhergehenden Ansprüche, **dadurch gekennzeichnet, dass** erkannt wird, dass sich das Fahrzeug (1) in einem Rollenprüfstand (2) befindet, wenn eine oder mehrere der folgenden Bedingungen erfüllt sind: die Räder (5c, 5d) einer Achse drehen sich mit einer bestimmten Geschwindigkeit, während die Räder (5a, 5b) einer anderen Achse still stehen; dieser Zustand dauert länger als eine vorgegebenen Zeit; die Zündung ist ein bzw. aus; das Getriebe befindet sich im Leerlauf.

6. Steuergerät, umfassend Mittel zum Durchführen eines der vorstehend beanspruchten Verfahren.

## Claims

1. Method for securing a vehicle (1) which is located with the wheels (5c, 5d) of one axle in a roller-type test stand (2) against unintentional pushing out from the test stand (2) while the parking brake is being checked, **characterized in that** it is determined by sensor whether the vehicle (1) is in a roller-type test stand (2), and if this has been detected a braking torque is built up automatically at at least one wheel brake of a wheel (5a, 5b) which is located outside the roller-type test stand (2), after an operator control element of the parking brake has been actuated.

2. Method according to Claim 1, **characterized in that** the braking torque is built up at at least one wheel brake of a front wheel (5a, 5b).

3. Method according to Claim 1 or 2, **characterized in that** an actuator of the service brake is actuated automatically in order to increase the braking torque at the at least one wheel brake.

4. Method according to one of the preceding claims, **characterized in that** the braking torque is reduced again if a request to release the parking brake has been detected.

5. Method according to one of the preceding claims, **characterized in that** it is detected that the vehicle (1) is in a roller-type test stand (2) if one or more of the following conditions are met: the wheels (5c, 5d) of one axle are rotating at a specific speed while the wheels (5a, 5b) of another axle are stationary; this state lasts for longer than a predefined time; the ignition is on or off; the gearbox is in the idling mode.

6. Control unit, comprising means for carrying out one of the methods claimed above.

## Revendications

1. Procédé pour sécuriser un véhicule (1), dont les roues (5c, 5d) d'un essieu se trouvent sur un banc d'essai à rouleaux (2), afin de l'empêcher de glisser accidentellement hors du banc d'essai (2) lors d'un contrôle du frein de stationnement, **caractérisé en ce qu'**on détermine à l'aide de capteurs si le véhicule (1) se trouve sur un banc d'essai à rouleaux (2) et, si cela a été décelé, un couple de freinage est établi automatiquement sur au moins un frein de roue d'une roue (5a, 5b) qui se trouve hors du banc d'essai à rouleaux (2), après qu'un élément de commande du frein de stationnement a été actionné.

2. Procédé selon la revendication 1, **caractérisé en ce que** le couple de freinage est établi sur au moins un frein de roue d'une roue avant (5a, 5b).

3. Procédé selon la revendication 1 ou 2, **caractérisé en ce qu'**un actionneur du frein de service est commandé automatiquement afin d'augmenter le couple de freinage sur l'au moins un frein de roue.

4. Procédé selon l'une quelconque des revendications précédentes, **caractérisé en ce que** le couple de freinage est à nouveau établi lorsqu'une demande de desserrement du frein de stationnement a été décelée.

5. Procédé selon l'une quelconque des revendications précédentes, **caractérisé en ce que** l'on décèle que le véhicule (1) se trouve sur un banc d'essai à rouleaux (2) lorsqu'une ou plusieurs des conditions suivantes sont remplies : les roues (5c, 5d) d'un essieu tournent à une vitesse déterminée tandis que les roues (5a, 5b) d'un autre essieu sont immobiles ; cet état dure plus longtemps qu'une durée prédéfinie ; l'allumage est enclenché ou coupé ; la boîte de vitesses se trouve au point mort.

6. Appareil de commande, comportant des moyens pour mettre en oeuvre l'un des procédés revendiqués précédemment.
